(19) **Europäisches Patentamt**
**European Patent Office**
**Office européen des brevets**

(11) **EP 3 896 612 B1**

(12) **EUROPEAN PATENT SPECIFICATION**

(45) Date of publication and mention
of the grant of the patent:
**13.12.2023 Bulletin 2023/50**

(21) Application number: **20169266.2**

(22) Date of filing: **14.04.2020**

(51) International Patent Classification (IPC):
**G06N 3/00** *(2023.01)* **G06V 10/774** *(2022.01)*
**G06V 10/776** *(2022.01)*

(52) Cooperative Patent Classification (CPC):
**G06N 20/00; G06V 10/774; G06V 10/776;**
G06N 3/008; G06N 3/04; G06N 3/08

(54) **DEVICE AND METHOD FOR TRAINING A CLASSIFIER**

VORRICHTUNG UND VERFAHREN ZUM TRAINIEREN EINES KLASSIFIKATORS

DISPOSITIF ET PROCÉDÉ D'APPRENTISSAGE D'UN CLASSIFICATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.10.2021 Bulletin 2021/42**

(73) Proprietor: **Robert Bosch GmbH
70442 Stuttgart (DE)**

(72) Inventors:
• **Finnie, Nicole Ying
71034 Boeblingen (DE)**
• **Hutmacher, Robin
71272 Renningen (DE)**
• **Metzen, Jan Hendrik
71034 Boeblingen (DE)**

(56) References cited:
**US-A1- 2019 370 683**

• **ALEXANDRU CONSTANTIN SERBAN ET AL:
"Adversarial Examples - A Complete
Characterisation of the Phenomenon",
ARXIV.ORG, CORNELL UNIVERSITY LIBRARY,
201 OLIN LIBRARY CORNELL UNIVERSITY
ITHACA, NY 14853, 2 October 2018 (2018-10-02),
XP080929044,**
• **MOOSAVI-DEZFOOLI SEYED-MOHSEN ET AL:
"Universal Adversarial Perturbations", IEEE
COMPUTER SOCIETY CONFERENCE ON
COMPUTER VISION AND PATTERN
RECOGNITION. PROCEED2017 IEEE
CONFERENCE ON COMPUTER VISION AND
PATTERN RECOGNITIONINGS, IEEE
COMPUTER SOCIETY, US, 21 July 2017
(2017-07-21), pages 86-94, XP033249343, ISSN:
1063-6919, DOI: 10.1109/CVPR.2017.17 [retrieved
on 2017-11-06]**
• **XIAO YANG ET AL: "Design and Interpretation of
Universal Adversarial Patches in Face
Detection", ARXIV.ORG, CORNELL UNIVERSITY
LIBRARY, 201 OLIN LIBRARY CORNELL
UNIVERSITY ITHACA, NY 14853, 30 November
2019 (2019-11-30), XP081549086,**

# Description

The invention concerns a method for training a classifier, a method for classification, a method for operating an actuator, a computer program, a machine-readable storage medium, a control system, and a training system.

Prior art

DE 10 2018 200 724 A1 discloses a method for generating universal adversarial perturbations. US2019/370683 discloses a method to generate universal adversarial perturbations for an initial set of training data for a classifier to further train the classifier and make it more robust. The article from Alexandru Constantin Serban and others, titled "Adversarial Examples - A Complete Characterisation of the Phenomenon", published by the Cornell University Library in October 2018 is an overview of adversarial examples, including methods to generate them. The article published by Moosavi-Dezfooli Seyed-Mohsen and others, titled "Universal Adversarial Perturbations", published by the IEEE COMPUTER SOCIETY on the 21 July 2017 (as part of the proceedings of the IEEE conference on computer vision and pattern recognition of 2017 (pages 86-94), discloses a systematic algorithm for computing universal perturbations to show that state-of-the-art deep neural networks are highly vulnerable to such perturbations, albeit being quasi-imperceptible to the human eye. The article published by Xiao Yang and others, titled "Design and Interpretation of Universal Adversarial Patches in Face Detection", published by the Cornell University Library on the 30 November of 2019, discloses the generation and use of universal adversarial patches for faces in images.

Advantages of the invention

Classifiers may be employed in various technical devices. However, they may be prone to misclassifying maliciously changed inputs known as adversarial examples.

DE 10 2018 200 724 A1 discloses a method for generating universal adversarial perturbations. Here, a perturbation is obtained which can be applied to almost arbitrary input signals for a classifier and fool the classifier into misclassifying the otherwise correctly classified input signals.

The perturbations hence pose a special risk when employing classifiers, especially when using the classifier in safety-critical products. For example, a classifier may be used in an autonomous vehicle for detecting pedestrians in order to avoid collisions with the pedestrians. Here, universal adversarial examples could potentially be used to maliciously hide pedestrians from the classifier, exposing them to the risk of being hit bit the autonomous vehicle.

It is hence of great importance to safeguard classifiers against these perturbations.

The method with features according to claim 1 is able to train a classifier to become more robust against perturbations also known as universal adversarial examples.

Disclosure of the invention

In a first aspect, the invention is concerned with a computer-implemented method for training a classifier for classifying input signals provided to the classifier, as provided by claim 1.

The term "classifier" may be understood to mean a device that accepts an input signal and provides an output signal characterizing a classification of the input signal. For this, the classifier may obtain the output signal by feeding the input signal to a machine learning model, especially a neural network. In addition, the classifier may adapt the input signal before feeding it into the classifier, e.g., extracting features from the input signal. Additionally, the classifier may also post-process the output signal of the machine learning model.

The classifier may accept input signals of various modalities, especially images such as, e.g., video images, RADAR images, LIDAR images and/or ultrasonic images as well as thermal camera images. For images, the classifier may preferably comprise a convolutional neural network.

Alternatively, the classifier may accept audio data as input, e.g., in the form of a quantized signal or a feature representation of an audio signal such as MFCC. For audio data, the classifier may preferably comprise a transformer network or a recurrent neural network, e.g., an LSTM.

Alternatively, an input signal may also comprise data which is a combination of multiple sensor signals and/or sensor signals of different modalities. When providing both image and audio data in the input signal, the classifier may preferably comprise different kinds of neural networks for processing the respective parts of the input signal, e.g., a combination of one or multiple convolutional neural networks and one or multiple transformer networks.

The classification characterized by the output signal may assign one or multiple class labels to the input signal. Alternatively or additionally, it can be envisioned that the output signal characterizes a classification in the form of an object detection, especially when using image data as input signals. Alternatively or additionally, it can be envisioned that the output signal characterizes a semantic segmentation of the input signal.

For audio signals, a classification may assign class labels to an entire sequence of audio data. Alternatively or additionally, the classification may also be of the form of a detection of the beginning and ending of certain audio events (e.g., sirens in a microphone recording) of an audio sequence.

The first perturbations from the set of perturbations may be used as initializations for creating second perturbations which can be applied to the input signals from the first dataset in order to obtain adversarial examples for the classifier. An adversarial example may be understood as an input signal which has been adapted to cause a misclassification by the classifier.

Applying a perturbation to an input signal can be understood as overlaying the input signal with the perturbation. For example, when using images as input signals the perturbation may be given by a small image patch that may be superimposed onto a given input image in order to form an adversarial example. In this case, the position where to place the patch in the input image may be chosen at random. Alternatively or additionally, the patch may also be transformed by an affine transformation before applying it to the input image. For audio data, the perturbations may be superimposed onto a random part of an audio sequence in order to form an adversarial example.

It can be further envisioned, that the perturbations and the input signals have the same dimensionality and that applying the perturbation to the input signal may be achieved by adding together the perturbation and the input signal. For example, when using image data, a perturbation may have the same size as the images used for training the classifier. In this case, the pixel values of the perturbation and the image may be added to form an adversarial example. Additionally, the perturbation may be scaled by a scalar value before being applied to the input image. A similar approach may be used mutatis mutandis for applying a respective perturbation to an audio signal.

When the classifier provides an output signal for an input signal, the output signal may comprise a plurality of logit values, wherein each of these logit values corresponds to a class. Also, the input signal may be assigned a desired class and the output signal may be considered as characterizing a correct classification, if the logit value corresponding to the desired class is the largest among the plurality of logit values.

For assessing whether a second perturbation is stronger, i.e., more apt to be used for fooling the classifier than a first perturbation, the second perturbation may be applied to an input signal to obtain a corresponding second adversarial example and the first perturbation may be applied to the same input signal to obtain a first adversarial example. The classifier may then obtain a second output signal using the second adversarial example as input signal and a first output signal using the first adversarial example as input signal. The second output signal hence corresponds to the second perturbation while the first output signal corresponds to the first perturbation.

The second perturbation may then be considered stronger than the first perturbation if the logit value of the desired class is smaller in the second output signal than in the first output signal. Similarly, the second perturbation may also be considered to be stronger than the first perturbation if the largest logit value of the non-desired classes in the second output signal is bigger than the largest logit value of the non-desired classes in the first output signal. Both options may be understood as the classifier being more confident in a wrong prediction using the second perturbation rather than the first perturbation.

Alternatively or additionally, an output signal may comprise a plurality of probability values, wherein each of these probability values corresponds to a class, and the first and second output signal may be computed as before. In this case, the second perturbation may be considered stronger than the first perturbation if the probability value of the desired class is smaller in the second output signal than in the first output signal.

Training the classifier with the proposed method may be understood as a form of meta-training, wherein the set of perturbations as well as the classifier are trained. The classifier is trained with the goal of achieving as high of a classification accuracy (also known as performance) as possible, while the method also seeks to find as strong of a set of perturbations as possible.

Training the classifier with increasingly strong perturbations hence allows for hardening the classifier against strong adversarial attacks and makes it extremely robust.

The training is carried out in an iterative fashion. In each training step, the method selects a batch of training data, comprising one or multiple tuples of input signals and desired output signals. For each input signal, a first perturbation is drawn randomly with replacement from the set of perturbations.

Each first perturbation drawn this way may then be adapted to its corresponding input signal in order to determine a stronger second perturbation.

The classifier is then be trained by providing it with the adversarial examples obtained from applying the obtained second perturbations to their respective input signals and minimizing a classification loss characterizing the difference between the obtained output signals to the desired output signals for the respective input signals.

In addition, each first perturbation is replaced in the set of perturbations by a weighted sum of the first perturbation itself and the second perturbation. This advantageously also trains the perturbations to become stronger in general. The benefit for the training method is that the classifier has to learn to defend itself against increasingly stronger perturbations. In turn, this helps the classifier to become robust against adversarial attacks in general.

In another aspect, it can be further envisioned that at least one perturbation from the set of perturbations is provided based on a second adversarial example of the classifier, wherein the classifier is a pretrained classifier.

The process of training the classifier benefits from initializing the perturbations to be diverse. The advantage of this is that diverse perturbations lead to the classifier to become robust against a diverse plurality of adversarial examples and hence a diverse plurality of perturbations.

In order to obtain an initial set of strong perturbations, the classifier may be pretrained without a defense method against adversarial examples. Afterwards, one or multiple second adversarial examples can be obtained from the classifier, e.g., by adapting the images in the training dataset with known adversarial attack methods. The perturbations necessary to cause the one or multiple second adversarial examples may then be used as initial set of perturbations for the training.

The advantage of this approach is, that the perturbations used for initializing the training can already be used to form adversarial examples. The step of forming a second perturbation is hence greatly speed up as, e.g., gradient based approaches such as the iterative fast gradient sign method (I-FGSM) or projected gradient descent (PGD) require considerably fewer steps for obtaining the second perturbation from the first perturbation. In turn, this leads to a faster training, which subsequently leads to the classifier being able to extract information from more training samples during training. This has the effect that the classifier's performance and robustness is improved even further.

In another aspect, it can be further envisioned that the second adversarial example is provided based on applying random noise at a random location of an input signal from the first dataset.

When using image data as input, the noise may be applied across an image. Alternatively, the noise may be applied to a smaller region of the image in the form of a patch. It can be further envisioned that the patch undergoes some form of transformation such as rotation, translation or scaling before being applied to the image. The random noise may further be used to obstruct certain pixels. Alternatively, the noise may be blended over the image.

Similarly, when using audio signals, the noise may be transformed by, e.g., translation, scaling of the amplitudes or scaling of individual frequencies before being applied to the audio signals. For application, the noise may be blended over the original audio signal. Alternatively, certain frequencies of the original signal could be replaced by certain frequencies of the noise.

Using random noise as initial perturbations allows for obtaining highly diverse initial perturbations. This diversity allows for defending the classifier against a wide range of adversarial examples. In turn, this improves the performance and robustness of the classifier.

For image data, scaling may be considered the scaling of intensity or pixel values. For audio data, the amplitude of an audio signal may be scaled to obtain an adapted input signal.

In the step of applying the adapted input signals as perturbations, it can be envisioned that each adapted input signal is applied to each input signal from the first dataset.

A first value for a corresponding adapted input signal may for example be determined by dividing the number of incorrectly classified new input signals corresponding to the adapted input signal by the number of all new input signals corresponding to the adapted input signal.

The advantage of this approach is that the adapted input signals show a diverse content and may hence serve as good initialization for obtaining diverse perturbations. In turn, this initialization reduces the time necessary to obtain the second perturbations. This leads to the training being speed up which allows the classifier to process more data, which leads to a better performance of the classifier.

It can be further envisioned that the method for training further comprises the step of:
Training the classifier based on the input signal and the corresponding desired output signal.

The advantage of this approach is that the classifier will not only be trained on adversarial examples but unperturbed input signals as well. This enables the classifier to not only focus on defending against the perturbations but also to achieve as high of a performance as possible on unperturbed images.

Embodiments of the invention will be discussed with reference to the following figures in more detail. The figures show:

Figure 1    a control system comprising a classifier controlling an actuator in its environment;
Figure 2    the control system controlling an at least partially autonomous robot;
Figure 3    the control system controlling an automated personal assistant;
Figure 4    the control system controlling an access control system;
Figure 5    the control system controlling a surveillance system;
Figure 6    a flow chart of a method for training the classifier;
Figure 7    a training system for training the classifier;

Description of the embodiments

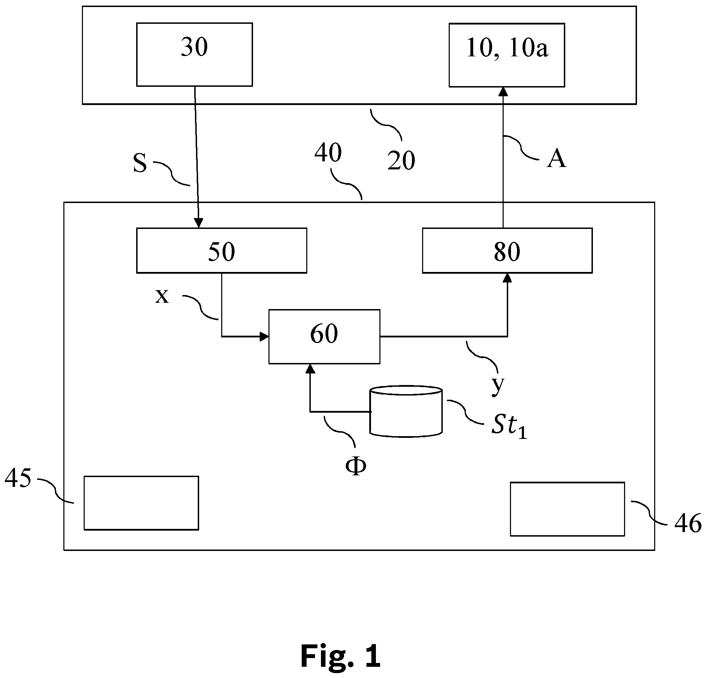

Shown in figure 1 is an actuator (10) in its environment (20). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of actuator control commands (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (x). Alternatively, in case of no receiving unit (50), each sensor signal (S) may directly be taken as an input signal (x). The input signal (x) may, for example, be given as an excerpt from the sensor signal (S). Alternatively, the sensor signal (S) may be processed to yield the input signal (x).

The input signal (x) is then passed on to a classifier (60).

The classifier (60) is parametrized by a set ($\Phi$) of parameters, which are stored in and provided by a parameter storage ($St_1$).

The classifier (60) determines an output signal (y) from the input signals (x). The output signal (y) comprises information that assigns one or more labels to the input signal (x). The output signal (y) is transmitted to an optional conversion unit (80), which converts the output signal (y) into the control commands (A). The actuator control commands (A) are then transmitted to the actuator (10) for controlling the actuator (10) accordingly. Alternatively, the output signal (y) may directly be taken as actuator control commands (A).

The actuator (10) receives actuator control commands (A), is controlled accordingly and carries out an action corresponding to the actuator control commands (A). The actuator (10) may comprise a control logic which transforms an actuator control command (A) into a further control command, which is then used to control actuator (10).

The control system (40) may comprise a sensor (30). In even further embodiments, the control system (40) alternatively or additionally may comprise the actuator (10).

The classifier (60) may be designed to identify lanes on a road ahead, e.g., by classifying a surface of the road and markings on the road, and identifying lanes as patches of road surface between the markings. Based on an output of a navigation system, a suitable lane for pursuing a chosen path can then be selected, and depending on a present lane and said target lane, it may then be decided whether a vehicle (100) is to switch lanes or stay in the present lane. The actuator control command (A) may then be computed by, e.g., retrieving a predefined motion pattern from a database corresponding to the identified action.

The classifier (60) may also detect road signs and traffic lights in the environment (20). Upon identifying road signs or traffic lights, depending on an identified type of road sign or an identified state of said traffic lights, corresponding constraints on possible motion patterns of the vehicle (100) may then be retrieved from, e.g., a database, a planned trajectory of the vehicle (100) may be computed according to the constraints, and the actuator control command (A) may be computed to steer the vehicle (100) such as to execute the planned trajectory.

The classifier may also detect pedestrians and/or vehicles in the environment (20). Upon identifying pedestrians and/or vehicles, a projected future behavior of the pedestrians and/or vehicles may be estimated, and based on the estimated future behavior, a trajectory may then be selected such as to avoid collision with the identified pedestrians and/or vehicles, and the actuator control command (A) may be computed to steer the vehicle (100) such as to execute the trajectory.

In further embodiments, it can be envisioned that the control system (40) controls a display (10a) instead of or in addition to the actuator (10).

Furthermore, the control system (40) may comprise a processor (45) (or a plurality of processors) and at least one machine-readable storage medium (46) on which instructions are stored, which, if carried out, cause the control system (40) to carry out a method according an aspect of the invention.

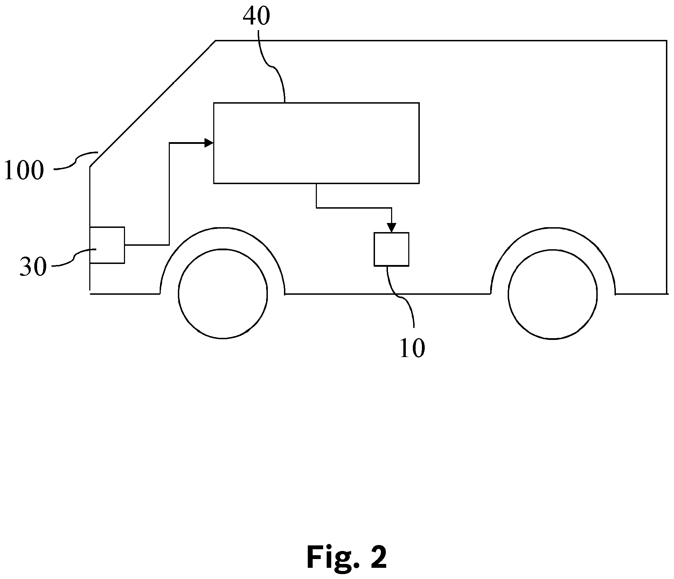

Figure 2 shows an example not forming part of the claims in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in the vehicle (100).

The sensor (30) may comprise an information system for determining a state of the actuator system. One example for such an information system is a weather information system which determines a present or future state of the weather in the environment (20).

For example, using the input signal (x), the classifier (60) may, for example, detect objects in the vicinity of the at least partially autonomous robot. The output signal (y) may comprise an information which characterizes where objects are located in the vicinity of the at least partially autonomous robot. The actuator control command (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The actuator control commands (A) may be determined such that the actuator (or actuators) (10) is/are controlled such that vehicle (100) avoids collisions with the detected objects. Detected objects may also be classified according to what the classifier (60) deems them most likely to be, e.g., pedestrians or trees, and the actuator control commands (A) may be determined depending on the classification.

The at least partially autonomous robot not forming part of the invention as claimed, may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the actuator command control (A) may be determined such that propulsion unit and/or steering and/or brake of the mobile robot are controlled such that the mobile robot may avoid collisions with the identified objects.

The at least partially autonomous robot not forming pat of the claimed subject matter may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an actuator control command (A) may be determined to cause the actuator (10) to spray the plants with a suitable quantity of suitable liquids and/or cut the plants.

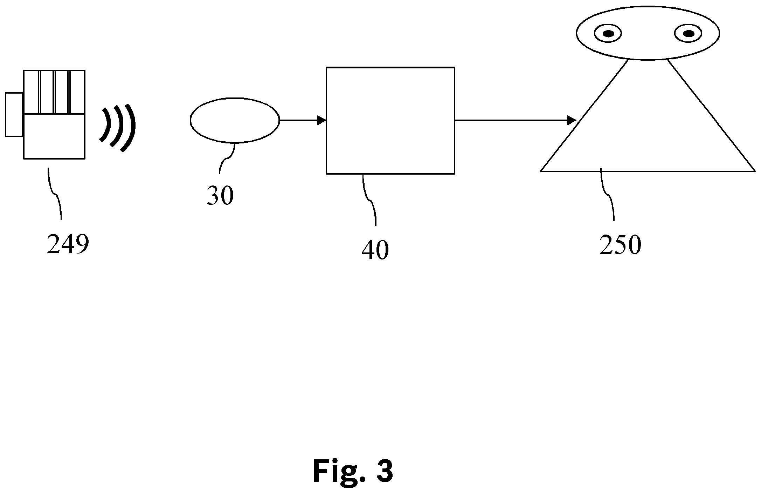

Shown in figure 3 is an example, not forming part of the claims, in which the control system (40) is used for controlling an automated personal assistant (250). The sensor (30) may be an optic sensor, e.g. for receiving video images of a gestures of a user (249). Alternatively, the sensor (30) may also be an audio sensor, e.g., for receiving a voice command of the user (249).

The control system (40) then determines actuator control commands (A) for controlling the automated personal assistant (250). The actuator control commands (A) are determined in accordance with the sensor signal (S) of the sensor (30). The sensor signal (S) is transmitted to the control system (40). For example, the classifier (60) may be configured to, e.g., carry out a gesture recognition algorithm to identify a gesture made by the user (249). The control system (40) may then determine an actuator control command (A) for transmission to the automated personal assistant (250). It then transmits the actuator control command (A) to the automated personal assistant (250).

For example, the actuator control command (A) may be determined in accordance with the identified user gesture recognized by the classifier (60). It may then comprise information that causes the automated personal assistant (250) to retrieve information from a database and output this retrieved information in a form suitable for reception by the user (249).

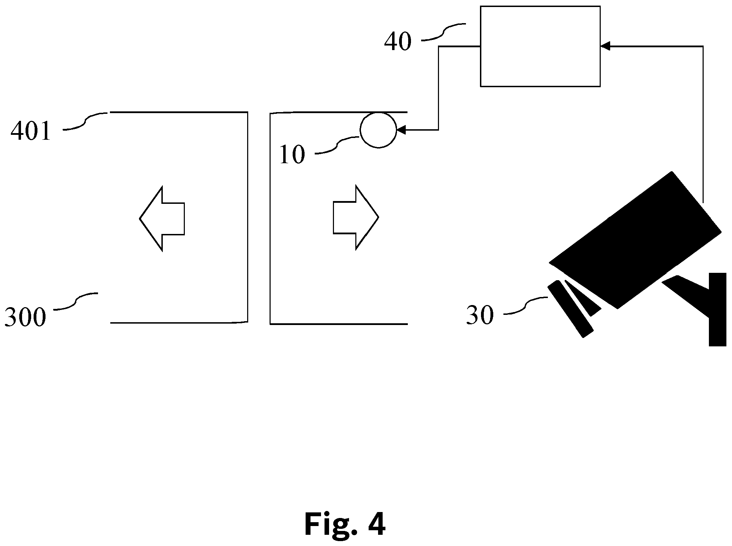

Shown in figure 4 is an example, not forming part of the claims, in which the control system (40) controls an access control system (300). The access control system (300) may be designed to physically control access. It may, for example, comprise a door (401). The sensor (30) can be configured to detect a scene that is relevant for deciding whether access is to be granted or not. It may for example be an optical sensor for providing image or video data, e.g., for detecting a person's face. The classifier (60) may be configured to interpret this image or video data, e.g., by matching identities with known people stored in a database, thereby determining an identity of the person. The actuator control signal (A) may then be determined depending on the interpretation of the classifier (60), e.g., in accordance with the determined identity. The actuator (10) may be a lock, which is opened or closed depending on the actuator control signal (A).

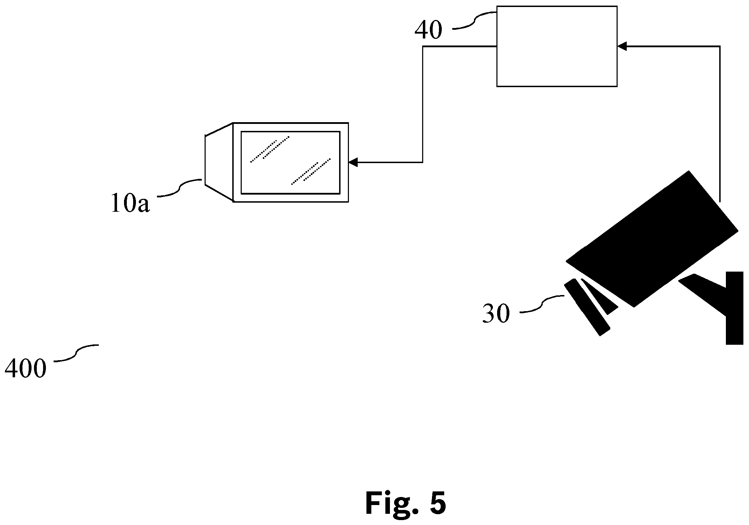

Shown in figure 5 is an example, not forming part of the claims, in which the control system (40) controls a surveillance system (400). This embodiment is largely identical to the embodiment shown in figure 4. Therefore, only the differing aspects will be described in detail. In this embodiment, the sensor (30) is configured to detect a scene that is under surveillance. The control system (40) does not necessarily control an actuator (10), but may alternatively control a display (10a). For example, the classifier (60) may determine a classification of a scene, e.g., whether the scene detected by an optical sensor (30) is suspicious. The actuator control signal (A), which is transmitted to the display (10a), may then, e.g., be configured to cause the display (10a) to adjust the displayed content dependent on the determined classification, e.g., to highlight an object that is deemed suspicious by the classifier (60).

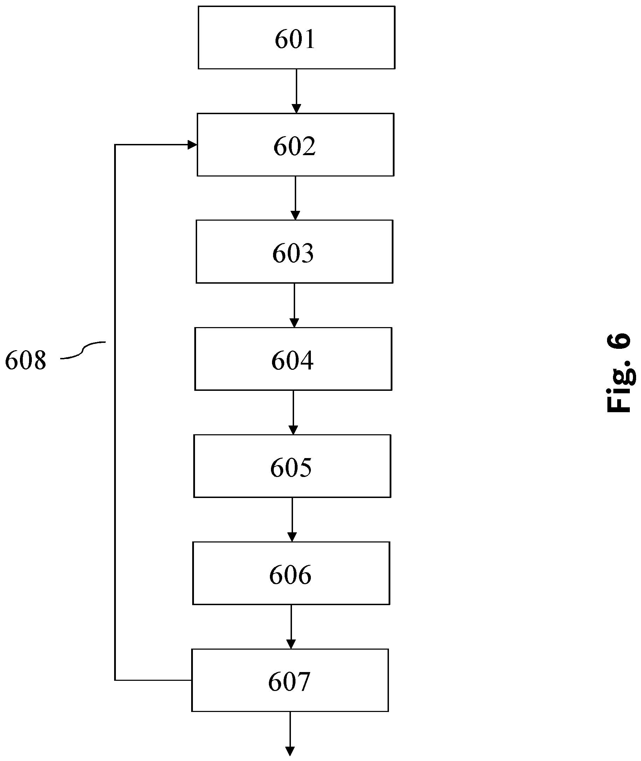

Shown in figure 6 is a flow-chart diagram that outlines an example not forming part of the claimed invention a method for training a classifier (60) of the control system (40) such that it is robust against adversarial attacks. The method for training is supplied with the classifier (60), preferably a neural network, which is pretrained on a pretraining dataset, as well as a training dataset of input signals and corresponding desired output signals.

In a first step (601) a plurality of perturbations is initialized. For initialization, the input signals from the training dataset can each be scaled with a random number to form perturbations. Each perturbation is then be applied to each input signal of the training dataset in order to obtain a plurality of new input signals. For each perturbation, a first value is then obtained by computing the fraction of new input signals corresponding to an adapted input signal for which the classifier provides an incorrect classification with respect to all new input signals corresponding to the adapted input signal.

Alternatively, the input signals may be downsampled and/or cropped in order to obtain perturbations. These perturbations can be applied to parts of the input signals of the training dataset in order to obtain the plurality of new input signals. For example, when using images as input signals, the perturbations may be applied as patches to the input signals of the training dataset.

Alternatively, the perturbations may be initialized as noise which is applied to the input signal, either to the entire input signal or parts thereof, wherein each of the perturbations is then further adapted to an individual input signal from the training dataset to fool the classifier. This can be achieved using, e.g., the I-FGSM or the PGD attack algorithms for creating adversarial examples.

In a second step (602) a subset of the training dataset is then selected to serve as training batch. For this, a desired amount of input signals and corresponding desired output signals is chosen at random form the training dataset.

In a third step (603) a perturbation from the plurality of perturbations is drawn randomly with replacement for each pair of input signal and corresponding desired output signal from the training batch.

In a fourth step (604) each of the drawn perturbations is adapted to its corresponding input signal and desired output signal such that when the perturbation is applied to the respective input signal an adversarial example for the classifier (60) is created. This can be achieved by, e.g., running the I-FGSM or PGD attack algorithms. For each perturbation, this step returns a second perturbation which has been adapted to the respective input signal.

In a fifth step (605) each second perturbation is applied to its respective input signal in order to obtain a plurality of adversarial examples for the classifier (60).

In a sixth step (606), the classifier may be trained such that it predicts the desired output signal for an adversarial example obtained in the previous step. For this, a classifier can be trained using (stochastic) gradient descent or an adapted form thereof, e.g., Adam. When training a classifier (60) this way, the classifier predicts an output signal based on the adversarial example. The predicted output signal is then compared to the desired output signal using a loss function. The classifier is then adapted such that a loss value obtained from the loss function becomes smaller when again processing the adversarial example by the classifier (60) and comparing the then predicted output signal to the desired output signal. For example, when using, e.g., a neural network as classifier (60), a plurality of parameters of the neural network are adapted according to the negative gradient of the parameters with respect to the loss value.

Additionally, the classifier may also be trained using the input signal without altering it and the corresponding desired output signal.

In a seventh step (607) each randomly drawn perturbation is replaced in the plurality of perturbations by a linear combination of the perturbation itself and its corresponding second perturbation. The replacement may, e.g., be obtained according to the formula:

$$ l = (1 - \sigma) \cdot a_1 + \sigma \cdot a_2, $$

wherein $l$ is the linear combination, $a_1$ is the perturbation, $a_2$ is the second perturbation and $\sigma$ is a predefined value. This formulation can be understood as training the perturbations through meta-learning, wherein $\sigma$ is akin to a learning rate in gradient-based learning algorithms.

In an eight step (608) the steps two to seven are repeated. The steps may for example be repeated until the loss value falls below a predefined threshold. Alternatively, training may be carried out for a predefined amount of iterations. Having completed the desired number of iterations, the classifier (60) may then be used in the control system (40).

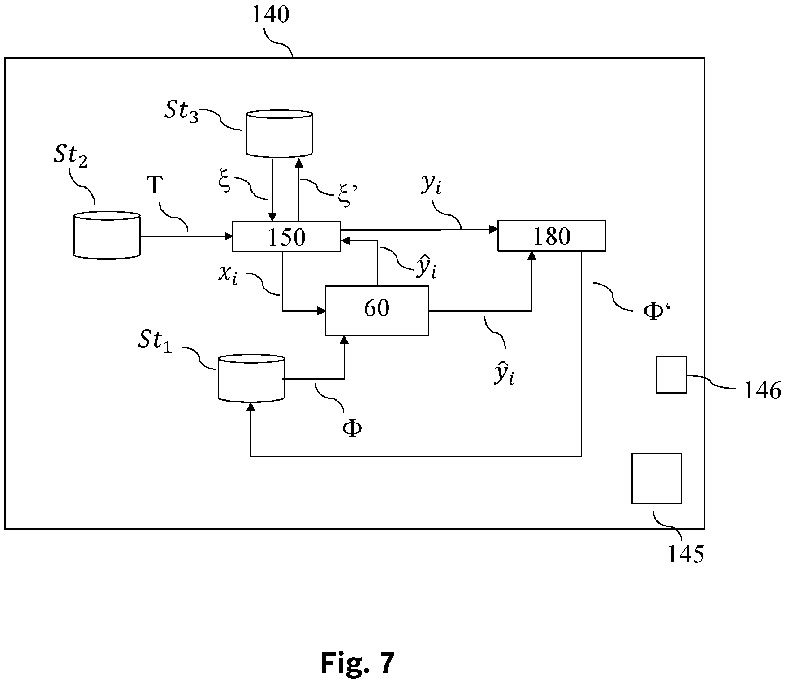

Shown in figure 7 is a training system (140) for carrying out the method displayed in figure 6. A training data unit (150) is configured to determine adapted input signals ($x_i$), which are passed on to the classifier (60). For this, the training data unit (150) accesses a computer-implemented training database ($St_2$) in which at least one set (T) of training data is stored. The set (T) comprises pairs of input signals and corresponding desired output signals ($y_i$). The set (T) of training data may be a full set of training data. It may also be a selected batch of training data if training is performed in batches. Additionally, the training data unit (150) receives a set ($\xi$) of perturbations from a computer-implemented perturbation database ($St_3$). The training data unit (150) then determines an adapted input signal ($x_i$) by selecting a pair of input signal and desired output signal ($y_i$), selecting a perturbation from the set ($\xi$) of perturbations and applying the selected perturbation to the input signal.

The obtained adapted input signal ($x_i$) is then provided to the classifier (60) which determines an output signal ($y$) from the adapted input signal ($x_i$). The output signal ($y$) is then passed back to the training unit (150), where the selected perturbation is adapted using projected gradient descent such that it becomes stronger. The procedure of applying the stronger perturbation to the input signal to obtain an adapted input signal ($x_i$), determining an output signal ($y_i$) for the adapted input signal ($x_i$) and adapting the perturbation to become stronger is then repeated for a desired amount of iterations.

After the desired amount of iterations, the output signal ($\hat{y}$) and desired output signal are passed to an update unit (180). Additionally, the training unit (150) stores an updated set ($\xi$) of perturbations in the perturbation database by replacing the selected perturbation with the adapted perturbation.

Based on the output signal ($\hat{y}$) and the desired output signal ($y_i$), the update unit then determines an updated set ($\Phi'$) of parameters for the classifier (60) using, e.g., stochastic gradient descent. The updated set ($\Phi'$) of parameters is then stored in the parameter storage ($St_1$).

The training process is then repeated for a desired amount of iterations, wherein the updated set ($\Phi'$) of parameters is provided as set ($\Phi$) of parameters by the parameter storage ($St_1$) in each iteration and the updated set ($\xi$) of perturbations is provided as set ($\xi$) of perturbations by the perturbation database ($St_3$).

Furthermore, the training system (140) may comprise a processor (145) (or a plurality of processors) and at least one machine-readable storage medium (146) on which instructions are stored, which, if carried out, cause the training system (140) to carry out the training method according an aspect of the invention.

The training unit (150) selects randomly for each iteration whether a perturbation is to be applied to an input signal or not. If it decides that no perturbation is to be applied to the input signal, the classifier (60) is provided with the input signal as adapted input signal ($x_i$) and no perturbation updates are computed.

**Claims**

1. Computer-implemented method for training a classifier (60) for classifying input signals (x) provided to the classifier (60), wherein the classifier (60) is configured to obtain an output signal (y) characterizing a classification of the input signal (x), wherein the method for training comprises the following steps:

   a. Providing (601) a set ($\xi$) of perturbations;
   b. Providing (602) a batch of training data comprising an input signal and a corresponding desired output signal ($y_i$);
   c. Selecting (603) at random a first perturbation form the set (f) of perturbations for the input signal and a corresponding desired output signal ($y_i$) from the subset;
   d. Obtaining (604) a second perturbation, which is stronger than the first perturbation, by adapting the first perturbation based on the input signal, the corresponding desired output signal ($y_i$) and the classifier (60);
   e. Obtaining (605) a first adversarial example ($x_i$) by applying the second perturbation to the input signal;
   f. Adapting (606) the classifier (60) by training the classifier (60) based on the first adversarial example ($x_i$) and the corresponding desired output signal ($y_i$) to harden the classifier (60) against the second perturbation;
   g. Replacing (607) the first perturbation in the set ($\xi$) of perturbations by a linear combination of the first perturbation and the second perturbation;
   h. Repeating (608) steps b. to g.

2. Method according to claim 1, wherein the classifier is pretrained on the first dataset or another dataset and one or multiple perturbations from the set of perturbations are provided (601) based on a corresponding set of second adversarial examples of the classifier.

3. Method according to claim 2, wherein a second adversarial example from the set of second adversarial examples is provided based on random noise.

4. Method according to claim 3, wherein the second adversarial example is provided based on applying random noise at a random location of an input signal from the first dataset.

5. Method according to any of the previous claims, wherein the classifier (60) is trained by supplying the first adversarial example ($x_i$) to the classifier and using the corresponding desired output signal ($y_i$) as a desired output signal for the adversarial example.

6. Method according to any of the previous claims, wherein the method for training further comprises the step of:
   m. Training the classifier (60) based on the input signal and the corresponding desired output signal ($y_i$).

7. Computer-implemented method for obtaining an output signal (y) characterizing a classification of an input signal (x) comprising the steps of:

   n. Training a classifier (60) according to any of the previous claims;
   o. Providing the classifier (60) in a control system (40);
   p. Obtaining the output signal (y) from the control system (40), wherein the control system (40) supplies the input signal (x) to the classifier (60) to obtain the output signal (y).

8. Method according to claim 7, wherein the input signal (x) is obtained based on a signal (S) of a sensor (30) and/or an actuator (10) is controlled based on the output signal (y) and/or a display device (10a) is controlled based on the output signal (y).

9. A control system (40) configured to control an actuator (10) and/or a display device (10a) based on an output signal (y) of a classifier (60), wherein the classifier is trained with a method according to any one of the claims 1 to 6.

10. Computer program that is configured to cause a computer to carry out the method according to any one of the claims 1 to 8 with all of its steps if the computer program is carried out by a processor (45, 145).

11. Machine-readable storage medium (46, 146) on which the computer program according to claim 10 is stored.

12. A training system (140) configured to carry out a method according to any of the claims 1 to 6.

**Patentansprüche**

1. Computerimplementiertes Verfahren zum Trainieren eines Klassifikators (60) zum Klassifizieren von Eingangssignalen (x), die an den Klassifikator (60) bereitgestellt werden, wobei der Klassifikator (60) zum Erhalten eines Ausgangssignals (y) ausgelegt ist, das eine Klassifikation des Eingangssignals (x) charakterisiert, wobei das Verfahren zum Trainieren die folgenden Schritte umfasst:

a. Bereitstellen (601) eines Satzes ($\xi$) von Störungen;

b. Bereitstellen (602) eines Stapels von Trainingsdaten, umfassend ein Eingangssignal und ein entsprechendes gewünschtes Ausgangssignal ($y_i$);

c. Auswählen (603), nach dem Zufallsprinzip, einer ersten Störung aus dem Satz ($\xi$) von Störungen für das Eingangssignal und ein entsprechendes gewünschtes Ausgangssignal ($y_i$) aus dem Teilsatz;

d. Erhalten (604) einer zweiten Störung, die stärker als die erste Störung ist, durch Anpassen der ersten Störung basierend auf dem Eingangssignal, dem entsprechenden gewünschten Ausgangssignal ($y_i$) und dem Klassifikator (60) ;

e. Erhalten (605) eines ersten Adversarial-Beispiels ($x_i$) durch Anwenden der zweiten Störung auf das Eingangssignal;

f. Anpassen (606) des Klassifikators (60) durch Trainieren des Klassifikators (60) basierend auf dem ersten Adversarial-Beispiel ($x_i$) und dem entsprechenden gewünschten Ausgangssignal ($y_i$), um den Klassifikator (60) gegen die zweite Störung abzuhärten;

g. Ersetzen (607) der ersten Störung in dem Satz ($\xi$) von Störungen durch eine lineare Kombination der ersten Störung und der zweiten Störung;

h. Wiederholen (608) der Schritte b. bis g.

2. Verfahren nach Anspruch 1, wobei der Klassifikator auf dem ersten Datensatz oder einem anderen Datensatz vortrainiert ist und eine oder mehrere Störungen aus dem Satz von Störungen basierend auf einem entsprechenden Satz von zweiten Adversarial-Beispielen für den Klassifikator bereitgestellt werden (601).

3. Verfahren nach Anspruch 2, wobei ein zweites Adversarial-Beispiel aus dem Satz von zweiten Adversarial-Beispielen basierend auf einem Zufallsrauschen bereitgestellt wird.

4. Verfahren nach Anspruch 3, wobei das zweite Adversarial-Beispiel basierend auf einem Anwenden eines Zufallsrauschens an einer zufälligen Stelle eines Eingangssignals aus dem ersten Datensatz bereitgestellt wird.

5. Verfahren nach einem der vorhergehenden Ansprüche, wobei der Klassifikator (60) durch Liefern des ersten Adversarial-Beispiels ($x_i$) an den Klassifikator und Verwenden des entsprechenden gewünschten Ausgangssignals ($y_i$) als ein gewünschtes Ausgangssignal für das Adversarial-Beispiel trainiert wird.

6. Verfahren nach einem der vorhergehenden Ansprüche, wobei das Verfahren zum Trainieren ferner den Schritt umfasst:

m. Trainieren des Klassifikators (60) basierend auf dem Eingangssignal und dem entsprechenden gewünschten Ausgangssignal ($y_i$).

7. Computer-implementiertes Verfahren zum Erhalten eines Ausgangssignals (y), das eine Klassifikation eines Eingangssignals (x) charakterisiert, umfassend die Schritte:

n. Trainieren eines Klassifikators (60) nach einem der vorhergehenden Ansprüche;

o. Bereitstellen des Klassifikators (60) in einem Steuersystem (40);

p. Erhalten des Ausgangssignals (y) von dem Steuersystem (40), wobei das Steuersystem (40) das Eingangssignal (x) an den Klassifikator (60) liefert, um das Ausgangssignal (y) zu erhalten.

8. Verfahren nach Anspruch 7, wobei das Eingangssignal (x) basierend auf einem Signal (S) eines Sensors (30) erhalten wird und/oder ein Aktuator (10) basierend auf dem Ausgangssignal (y) gesteuert wird und/oder eine Anzeigevorrichtung (10a) basierend auf dem Ausgangssignal (y) gesteuert wird.

9. Steuersystem (40), das zum Steuern eines Aktuators (10) und/oder einer Anzeigevorrichtung (10a) basierend auf einem Ausgangssignal (y) eines Klassifikators (60) ausgelegt ist, wobei der Klassifikator mit einem Verfahren nach einem der Ansprüche 1 bis 6 trainiert ist.

10. Computerprogramm, das zum Bewirken, dass ein Computer das Verfahren nach einem der Ansprüche 1 bis 8 mit all seinen Schritten ausführt, wenn das Computerprogramm durch einen Prozessor (45, 145) ausgeführt wird, ausgelegt ist.

11. Maschinenlesbares Speichermedium (46, 146), auf dem das Computerprogramm nach Anspruch 10 gespeichert ist.

12. Trainingssystem (140), das zum Ausführen eines Verfahrens nach einem der Ansprüche 1 bis 6 ausgelegt ist.

## Revendications

1. Procédé mis en œuvre par ordinateur pour l'apprentissage d'un classificateur (60) pour la classification de signaux d'entrée (x) fournis au classificateur (60), le classificateur (60) étant configuré pour obtenir un signal de sortie (y) caractérisant une classification du signal d'entrée (x), le procédé d'apprentissage comprenant les étapes suivantes :

    a. fournir (601) un ensemble (ξ) de perturbations ;
    b. fournir (602) un lot de données d'apprentissage comprenant un signal d'entrée et un signal de sortie souhaité correspondant ($y_i$) ;
    c. sélectionner (603) au hasard une première perturbation de l'ensemble (ξ) de perturbations pour le signal d'entrée et un signal de sortie souhaité correspondant ($y_i$) dans le sous-ensemble ;
    d. obtenir (604) une deuxième perturbation, laquelle est plus forte que la première perturbation, en adaptant la première perturbation sur la base du signal d'entrée, du signal de sortie souhaité correspondant ($y_i$) et du classificateur (60) ;
    e. obtenir (605) un premier exemple contradictoire ($x_i$) en appliquant la deuxième perturbation au signal d'entrée ;
    f. adapter (606) le classificateur (60) en entraînant le classificateur (60) sur la base du premier exemple contradictoire ($x_i$) et du signal de sortie souhaité correspondant ($y_i$) pour renforcer le classificateur (60) contre la deuxième perturbation ;
    g. remplacer (607) la première perturbation dans l'ensemble (ξ) de perturbations par une combinaison linéaire de la première perturbation et de la deuxième perturbation ;
    h. répéter (608) les étapes b à g.

2. Procédé selon la revendication 1, dans lequel le classificateur est pré-entraîné sur le premier ensemble de données ou un autre ensemble de données et une ou plusieurs perturbations de l'ensemble de perturbations sont fournies (601) sur la base d'un ensemble correspondant de deuxièmes exemples contradictoires du classificateur.

3. Procédé selon la revendication 2, dans lequel un deuxième exemple contradictoire de l'ensemble de deuxièmes exemples contradictoires est fourni sur la base d'un bruit aléatoire.

4. Procédé selon la revendication 3, dans lequel le deuxième exemple contradictoire est fourni sur la base de l'application d'un bruit aléatoire à un emplacement aléatoire d'un signal d'entrée du premier ensemble de données.

5. Procédé selon l'une quelconque des revendications précédentes, dans lequel le classificateur (60) est entraîné par la fourniture du premier exemple contradictoire ($x_i$) au classificateur et par l'utilisation du signal de sortie souhaité correspondant ($y_i$) en tant que signal de sortie souhaité pour l'exemple contradictoire.

6. Procédé selon l'une quelconque des revendications précédentes, dans lequel le procédé d'apprentissage comprend en outre l'étape suivante :
   m. entraîner le classificateur (60) sur la base du signal d'entrée et du signal de sortie souhaité correspondant ($y_i$).

7. Procédé mis en œuvre par ordinateur pour obtenir un signal de sortie (y) caractérisant une classification d'un signal d'entrée (x), le procédé comprenant les étapes suivantes :

    n. entraîner un classificateur (60) selon l'une quelconque des revendications précédentes ;
    o. fournir le classificateur (60) dans un système de commande (40) ;
    p. obtenir le signal de sortie (y) en provenance du système de commande (40), le système de commande (40) fournissant le signal d'entrée (x) au classificateur (60) pour obtenir le signal de sortie (y).

8. Procédé selon la revendication 7, le signal d'entrée (x) étant obtenu sur la base d'un signal (S) d'un capteur (30) et/ou un actionneur (10) étant commandé sur la base du signal de sortie (y) et/ou un dispositif d'affichage (10a) étant commandé sur la base du signal de sortie (y).

9. Système de commande (40) configuré pour commander un actionneur (10) et/ou un dispositif d'affichage (10a) sur la base d'un signal de sortie (y) d'un classificateur (60), le classificateur étant entraîné avec un procédé selon l'une quelconque des revendications 1 à 6.

10. Programme informatique configuré pour amener un ordinateur à réaliser le procédé selon l'une quelconque des revendications 1 à 8 avec toutes ses étapes si le programme informatique est réalisé par un processeur (45, 145) .

11. Support de stockage lisible par machine (46, 146) sur lequel est stocké le programme informatique selon la revendication 10.

12. Système d'apprentissage (140) configuré pour réaliser un procédé selon l'une quelconque des reven-

dications 1 à 6.

**Fig. 1**

EP 3 896 612 B1

**Fig. 2**

**Fig. 3**

**Fig. 4**

**Fig. 5**

**Fig. 6**

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018200724 A1

- US 2019370683 A

**Non-patent literature cited in the description**

- **ALEXANDRU CONSTANTIN SERBAN.** Adversarial Examples - A Complete Characterisation of the Phenomenon. Cornell University Library, October 2018

- Universal Adversarial Perturbations. **MOOSAVI-DEZFOOLI SEYED-MOHSHEN.** proceedings of the IEEE conference on computer vision and pattern recognition. IEEE COMPUTER SOCIETY, 21 July 2017, 86-94
- **XIAO YANG.** Design and Interpretation of Universal Adversarial Patches in Face Detection. Cornell University Library, 30 November 2019